# EUROPÄISCHE PATENTSCHRIFT

(11) **EP 0 814 693 B1**
(45) Veröffentlichungstag und Bekanntmachung des Hinweises auf die Patenterteilung: **21.10.1998**
(21) Anmeldenummer: 96905873.4
(22) Anmeldetag: 14.03.1996
(51) Int. Cl.: A47J 41/00

(54) **KANNE FÜR FLÜSSIGKEITEN**
FLASK FOR LIQUIDS
BROC POUR LIQUIDES

(30) Priorität: 14.03.1995 DE 29504343 U
(43) Veröffentlichungstag der Anmeldung: 07.01.1998
(73) Patentinhaber: EMSA-Werke Wulf GmbH & Co., 48282 Emsdetten (DE)
(72) Erfinder: HORSTMANN, Klaus, D-48485 Neuenkirchen (DE)
(74) Vertreter: Grünecker, Kinkeldey, Stockmair & Schwanhäusser Anwaltssozietät
(86) Internationale Anmeldenummer: EP9601111
(87) Internationale Veröffentlichungsnummer: WO9628076

(56) Entgegenhaltungen:
- EP-A- 0 571 140
- DE-A- 3 510 339
- DE-U-29 512 021
- US-A- 3 400 866
- US-A- 3 443 728

## Beschreibung

Die Erfindung betrifft eine Kanne für Flüssigkeiten, insbesondere Isolierkanne, bei der eine von einem Öffnungsrand gebildete Ausgußöffnung mittels eines lösbar an der Kanne befestigten Deckels verschließbar ist, und der Deckel einen über eine Handhabe bewegbaren, in Richtung einer Schließstellung durch ein Federelement kraftbelasteten Verschluß aufweist, der an einem beabstandet zu dem Öffnungsrand vorgesehenen, separaten Deckelkörper bewegbar gehalten ist und über eine im wesentlichen vertikale Öffnungsbewegung zwischen einer die Ausgußöffnung freigebenden Öffnungsstellung und der die Ausgußöffnung verschließenden Schließstellung bewegbar ist, wobei der Verschluß in Öffnungsstellung im wesentlichen vertikal nach oben von der Ausgußöffnung ausgelenkt ist.

Bei einer aus der DE-U-83 33 674 bekannten Kanne dieser Gattung ist der Verschluß durch eine Ventilplatte gebildet, die über eine Rastverbindung mit einem Führungsring verbunden ist. Dieser ist in einem Deckelunterteil vertikal verschiebbar gelagert. Aus dem Führungsring steht ein Schaft hervor, der mit einer Handhabe bewegungsverbunden ist. Zwischen einem Widerlager und einem Boden des Führungsrings ist eine Spiralfeder vorgesehen, welche den Führungsring und damit die Ventilplatte in Richtung Schließstellung kraftbelastet. Zum Abdichten der Ausgußöffnung über die Ventilplatte und zum Abdichten des Führungsrings im Deckel sind eine Reihe von Dichtungsringen vorgesehen.

Andere gattungsgemäße Kannen mit ähnlichen Mechanismen sind in der D-C-34 27 429 und der DE-A-35 10 339 beschrieben.

Bei der Kinematik der gattungsgemäßen Kannen ist der Mechanismus zum Öffnen und Schließen des Verschlusses relativ kompliziert und störanfällig. Die dabei notwendigen Teile gewährleisten aber einen wirksamen Öffnungs- und Schließmechanismus mit ausreichender Dichtigkeit.

In der US-A-3,400,866 und der US-A-3,443,728 sind gattungsfremde Kannen beschrieben. Sie haben einen einstückig ausgebildeten Deckelkörper, der auf einen Flaschenhals aufgeschnappt wird. Der Deckelkörper ist integral mit einem Verschluß und einer Membran ausgebildet und liegt unmittelbar an der Ausgußöffnung an. Der Verschluß wird von der Membran gebildet. Entgegen den gattungsgemäßen Kannen wird die Membran seitlich, kippgliedartig ausgelenkt, um Flüssigkeit ausgießen zu können. Dies erfordert eine grundsätzlich andere Deckelkonstruktion, die mit gattungsgemäßen Kannen nicht vergleichbar ist.

Der Erfindung liegt die Aufgabe zugrunde, eine Kanne der eingangs genannten Gattung dahingehend zu verbessern, daß sie mit einem einfachen Mechanismus verschließbar ist, wobei im Betrieb die Ausgußöffnung leicht zu öffnen und wirksam zu verschließen ist.

Diese Aufgabe wird erfindungsgemäß gelöst mit einer gattungsgemäßen Kanne, die dadurch gekennzeichnet ist, daß das Federelement durch eine federelastische, den Verschluß mit dem Deckelkörper verbindende Membran gebildet ist, die in Öffnungsstellung unter Vorspannung, eine Rückstellkraft in Richtung Schließstellung erzeugend, verformt ist, wobei die Membran an dem Deckelkörper gelagert und separat dazu ausgebildet ist.

Eine separate Feder ist nicht mehr notwendig, so daß ebenfalls keine Schwierigkeiten bei der Anordnung und der flüssigkeitsdichten Abdichtung der Feder auftreten. Die Membran folgt der Bewegung des Verschlusses zwischen Öffnungs- und Schließstellung. Sie bewirkt die Führung, beziehungsweise relative Lagerung des Verschlusses zum Deckel. Außerdem wird die Membran zum Erzeugen der Federkräfte durch entsprechende Auslenkung benutzt. Dabei überträgt die Membran die Rückstellkräfte auf den Verschluß, so daß dieser in seiner Schließstellung kraftbelastet auf die Ausgußöffnung gedrückt wird. Beim Öffnen wird der Federwirkung der Membran durch die Handhabe entgegengewirkt, so daß beim Loslassen der Handhabe der Verschluß über die Membran automatisch in die Schließstellung zurückgedrückt wird. Durch die Wirkung der Membran ist weiterhin mittels der Handhabe eine vorteilhafte Ein-Hand-Bedienung der erfindungsgemäßen Kanne möglich.

Vorzugsweise erstreckt sich die Membran zumindest teilweise quer zur Öffnungsbewegung des Verschlusses. Dieser Teil der Membran kann quer zu seiner Erstreckungsrichtung beim Öffnen ausgelenkt werden, wobei die Verformungsfähigkeit dieses ebenen Teils am besten ausgenutzt wird.

Besonders vorteilhaft kann die Membran zumindest teilweise als ebener Kreisring ausgebildet sein. Dieser kann senkrecht zu seiner ebenen Erstreckung ausgelenkt werden und bewirkt gleichzeitig in Richtung seiner Ebene eine formstabile Halterung, beziehungsweise Führung des Verschlusses am Deckel. Innen- beziehungsweise Außenumfang des Kreisrings können zum Beispiel mit dem Deckel, beziehungsweise mit dem Verschluß verbunden sein.

Bei einem weiteren Ausführungsbeispiel weist die Membran einen ziehharmonikaartigen Faltenbalg auf. Je nach Länge des Faltenbalges kann der Abstand zwischen Öffnung- und Schließstellung entsprechend gewählt werden. Der Faltenbalg eignet sich dabei für besonders lange Öffnungswege. Durch die Wahl der Anzahl der Faltenstufen kann die Federwirkung des Balges entsprechend eingestellt werden. Es ist verständlich, daß zum Beispiel auch eine Kombination des erwähnten Kreisrings mit dem ziehharmonikaartigen Faltenbalg möglich ist.

Liegt der Verschluß in seiner Schließstellung an einem Öffnungsrand der Ausgußöffnung und/oder einem Dichtring der Ausgußöffnung an, wird das Kanneninnere besonders gut flüssigkeitsdicht und wärmegedämmt von dem Verschluß geschlossen. Die Wärmedämmung gilt selbstverständlich sowohl für kalt- als auch warmzuhaltene Flüssigkeiten. Eine ausreichende Flüssigkeitsdichtung ist bereits gegeben, wenn der Verschluß nur mit dem Öffnungsrand oder dem Dichtring in Anlage ist. Die Kombination von Anlage an Öffnungsrand und Dichtungsring ist besonders günstig, da bei Versagen einer Anlage die verbleibende Anlagedichtung noch eine ausreichende Flüssigkeitsdichtung herstellt. Dies ist beispielsweise von Vorteil beim Brechen eines Isolierkolbens, der in der Regel gegen den Dichtungsring gepreßt ist. Fällt in diesem Fall der Dichtungsring in das Kanneninnere hinein, verbleibt die Anlage des Verschlusses an dem Öffnungsrand. Sie stellt in diesem Fall noch einen flüssigkeitsdichten Abschluß der Ausgußöffnung dar.

Um auf die Vielzahl von Dichtungen bei den bekannten Kannen verzichten zu können, erweist es sich insbesondere als günstig, wenn die Membran den Verschluß mit dem Deckel flüssigkeitsdicht verbindet. Dadurch kann keine Flüssigkeit zwischen Verschluß, Membran und Deckel eintreten, so daß das Deckelinnere trocken bleibt und der dort angeordnete Mechanismus zum Betätigen des Verschlusses gegen äußere Einflüsse geschützt ist.

Bei einem weiteren Ausführungsbeispiel ist die Membran mit dem Verschluß über einen sich etwa längs zur Öffnungsbewegung erstreckenden Rohrabschnitt verbunden. Dieser kann als Befestigungsmittel oder Einfassung des Verschlusses dienen. Durch die Längserstreckung des Rohrabschnitts ist der Rohrabschnitt relativ formstabil und bewirkt eine Führung des Verschlusses gegenüber der Membran, beziehungsweise dem Deckel. Weiterhin kann durch Verformung des Rohrabschnitts zumindestens teilweise eine elastische Öffnungs- bzw. Schließkraft aufgebracht werden.

Der Rohrabschnitt kann vorteilhafterweise als Teil der Membran ausgebildet sein. Durch die geometrische Erstreckung des übrigen Teils der Membran, beziehungsweise des Rohrabschnitts ergibt sich die entsprechende Funktionsaufteilung in den federelastischen und den etwas formstabileren Teil.

Weist die Membran einen Kreisring auf, kann der Rohrabschnitt mit dem Innen- oder Außenumfang dieses Kreisrings verbunden sein und der Kreisring ist über den jeweils verbleibenden Umfang mit dem Deckel verbunden.

In diesem Zusammenhang ist weiterhin von Vorteil, wenn die Membran einen im wesentlichen umlaufenden Steg aufweist, der in einer Nut im Deckel gelagert ist. Auf diese Weise erfolgt eine einfache Befestigung der Membran am Deckel und gleichzeitig eine Abdichtung des Deckelinneren.

Um den Verschluß auch nach langer Zeit, wenn sich das Kannenvolumen etwas abgekühlt hat, leicht von der Ausgußöffnung abheben zu können und einen Druckausgleich mit der Umgebung herzustellen, kann in dem Verschluß eine das Kannenvolumen mit der Umgebung verbindende Entlüftungsöffnung vorgesehen sein. Diese ist in der Regel sehr klein im Verhältnis zur Ausgußöffnung. Vorzugsweise beträgt ihr Durchmesser 0,2 mm und sie ist in Form eines kleinen Belüftungsloches in dem Verschluß ausgebildet.

Bei einem günstigen Ausführungsbeispiel ist der Verschluß in der Öffnungsstellung arretierbar und über einen Lösehebel aus der Arretierung entkoppelbar. Die Arretierung des Verschlusses in der Öffnungsstellung erleichtert das Ausgießen, da die Handhabe, die zum Beispiel als erster Hebel ausgebildet sein kann, nicht ständig entgegen der Rückstellkraft der Membran gehalten werden muß. Nach dem Ausgießen kann über den Lösehebel die Arretierung entkoppelt werden und der Verschluß wird selbsttätig durch die Membran wieder auf die Ausgußöffnung aufgedrückt. Der Lösehebel kann als zweiter Hebel neben dem als Handhabe dienenden ersten Hebel vorgesehen sein.

Ein Beispiel für eine Arretierung des Verschlusses ist ein Federhebel im Deckel, durch den die Handhabe in Öffnungsstellung arretiert und der durch den Lösehebel aus der Arretierstellung für die Handhabe auslenkbar ist. Dabei bildet der Federhebel einen automatisch einschnappenden Mechanismus, der den Verschluß in Öffnungsstellung arretiert. Der Lösehebel kann beispielsweise als Kipphebel ausgebildet sein, der durch Verschwenken den Federhebel auslenkt und damit die Arretierung mit der Handhabe beziehungsweise dem Verschluß löst.

Bei einem einfachen Ausführungsbeispiel erstreckt sich die Membran nur oberhalb des Verschlusses, wobei dieser einen Dichtungsabschnitt aufweist, der durch entsprechende Anlage mit dem Rand der Ausgußöffnung und/oder dem Dichtring die Ausgußöffnung abdichtet.

Zur Verbesserung der Abdichtung der Ausgußöffnung in Schließstellung des Verschlusses, kann die Membran den Boden des Verschlusses zumindest gegenüberliegend zum Öffnungsrand und/oder Dichtring bedecken. Außerdem kann bei einer als Vollgummi ausgebildeten Membran, der Boden vollständig mit der Membran gummiert, das heißt von dieser bedeckt sein.

Um an eine Krümmung des Öffnungsrandes, beziehungsweise des Dichtringes besser angepaßt und besser an diese andrückbar geformt zu sein, erweist es sich als Vorteil, wenn Boden und/oder diesen bedeckende Membran konvex gekrümmt sind.

Es sind verschiedene Handhaben zum Verstellen eines in Schließstellung kraftbelasteten Verschlusses an sich bekannt und bei der erfindungsgemäßen Kanne einsetzbar. Dies sind beispielsweise Drehknöpfe zum vertikalen Verstellen des Verschlusses und Hebelmechanismen die den Verschluß relativ zur Ausgußöffnung kippen oder den Verschluß entlang eines von der Ausgußöffnung nach außen gekrümmt verlaufenden Öffnungsweges nach oben abheben. Bei einem einfachen Ausführungsbeispiel für eine Handhabe ist diese als im Deckel gelagerter, zweiarmiger Hebel ausgebildet, dessen Kipplager exzentrisch zur Kannenlängsachse angeordnet ist.

Ein entsprechendes Betätigungsende des Hebels steht aus dem Deckel nach außen vor. Das andere Ende des Hebels ist mit dem Verschluß bewegungsverbunden.

Dabei kann der Deckel eine Kappe und einen diese abstützenden, am unteren Ende einen Gewindeabschnitt aufweisenden Deckelkörper umfassen, wobei die Nut zum Lagern des Membransteges auf der Innenseite des Gewindeabschnitts angeordnet sein kann. Die beiden Teile sind leicht separat herstellbar und zum Zusammensetzen des Deckels miteinander verbindbar.

Das Kipplager des Hebels kann an der Kappe oder am Deckelkörper angeordnet sein. Bei einem einfachen Ausführungsbeispiel weist der Deckelkörper oberhalb des Gewindeabschnitts einen Deckelabsatz auf, an welchem das Kipplager angeordnet ist.

Um den Verschluß im wesentlichen in vertikaler Richtung abzuheben, ist es von Vorteil, wenn das Kipplager als sich horizontal erstreckende Lagerachse ausgebildet ist.

Der Hebel kann als flaches Bauteil und eben ausgebildet sein. Bei einem bevorzugten Ausführungsbeispiel ist der Hebel im wesentlichen L-förmig, wobei ein längerer L-Schenkel einen flachen Betätigungsabschnitt an seinem freien Ende aufweist und Seitenwände beide L-Schenkel zumindest außerhalb des Betätigungsabschnitts miteinander verbinden und an ihren unteren Enden mit Rastausnehmungen zum Aufrasten auf die Lagerachse ausgebildet sind. Auf diese Weise bildet der Hebel einen zumindest teilweise geschlossenen Körper, der aus dem Deckel seitlich und/oder nach oben hervorstehen kann.

Zur einfachen Verbindung von Hebel und Verschluß stehen auf Außenseiten der Seitenwände Lageraugen zur verschwenkbaren Lagerung eines mit dem Verschluß verbundenen Verschlußträgers ab. Analog kann zwischen den Seitenwänden eine Achse angeordnet sein, an der der Verschlußträger schwenkbar gelagert ist.

Im einfachsten Fall weist der Verschlußträger zwei vom Verschluß nach oben in Richtung Kappe abstehende Lagerarme auf, welche benachbart zu ihren oberen Enden Lageröffnungen zur Aufnahme der Lageraugen aufweisen. Der Verschlußträger kann separat zum Verschluß hergestellt und mit diesem verbunden sein.

Verschlußträger und dessen Verbindung mit dem Verschluß können durch die Membran nach außen flüssigkeitsdicht abgedeckt sein.

Zum leichteren Verbinden der Lagerarme mit den Lageraugen sind an oberen Enden und auf gegenüberliegenden Innenseiten der Lagerarme in Richtung der Lageröffnungen verlaufende Einführschrägen ausgebildet. Diese steigen rampenförmig in Richtung der Lageröffnungen an.

Bevorzugt ist eine einteilige Ausbildung von Verschluß und Verschlußträger. Eine einfache einteilige Ausbildung zeichnet sich dadurch aus, daß die Lagerarme in Verlängerung eines auf der Oberseite des Verschlusses angeordneten Rohrabsatzes verlaufen. Der Rohrabsatz kann gleichzeitig zur Anlage und zum Halten der Membran am Verschluß dienen. Das Halten der Membran kann reibungsschlüssig oder formschlüssig erfolgen.

Liegt der Verschluß, beziehungsweise die Membran in Schließstellung des Verschlusses auch oder nur am Dichtring an, kann es vorkommen, daß der Dichtring teilweise durch Fertigungstoleranzen bei den Isolierkolben etwas in Richtung des Deckels nach oben oder zur Ausgußöffnung nach innen gedrückt ist. In diesem Fall ist eine relativ hohe Andruckkraft in Schließstellung des Verschlusses erforderlich, um den Verschluß trotz der Auslenkung des Dichtringes entlang des gesamten Öffnungsrandes der Ausgußöffnung mit dem Dichtring in dichtende Anlage zu bringen oder Verschluß und Dichtring sind nicht vollständig abdichtend in Anlage miteinander. In diesem Zusammenhang hat es sich als Vorteil erwiesen, wenn der Dichtring einen auf dem Isolierkolben aufliegenden Dichtkörper aufweist, von dem im wesentlichen radial in Richtung Ausgußöffnung eine Dichtlippe vorsteht. Diese Dichtlippe ist in Schließstellung des Verschlusses mit diesem und/oder der Membran in Anlage. Da nicht der gesamte Dichtkörper bei der vorangehend beschriebenen Auslenkung des Dichtrings, sondern nur die Dichtlippe verformt werden muß, ist eine geringere Andruckkraft zur Abdichtung erforderlich. Diese wird auf jeden Fall durch die federelastische Membran bereitgestellt. Dichtlippe und Dichtkörper sind in der Regel einteilig ausgebildet.

Die Dichtlippe kann im Prinzip an beliebiger Stelle vom Dichtkörper abstehen. Bevorzugt ist ein Ausführungsbeispiel, bei dem eine Oberseite der Dichtlippe flächenbündig zur Oberseite des Dichtkörpers angeordnet ist und eine Unterseite der Dichtlippe im wesentlichen senkrecht zur Innenwand des Dichtkörpers verläuft. Um eine Verformung der Dichtlippe bei gleichzeitiger Abdichtung durch Anlegen des Verschlusses zu gewährleisten, kann die Dichtlippe mit abnehmender Dicke in Richtung Dichtkörper ausgebildet sein. Dies ergibt sich beispielsweise dadurch, daß die Unterseite der Dichtlippe unter einem Winkel von kleiner gleich 20°, vorzugsweise 8° bis 12°, in Richtung zur Innenwand des Dichtkörpers nach oben geneigt verläuft.

Im folgenden werden vorteilhafte Ausführungsbeispiele der Erfindung anhand der in der Zeichnung beigefügten Figuren näher erläutert und beschrieben.

Es zeigen:
- Figur 1: einen Vertikalschnitt durch einen oberen Abschnitt einer erfindungsgemäßen Kanne;
- Figur 2: einen Vertikalschnitt entsprechend zu Figur 1 durch ein weiteres Ausführungsbeispiel der erfindungsgemäßen Kanne mit Verschluß in Schließstellung;
- Figur 3: einen Vertikalschnitt gemäß Figur 2 mit Verschluß in Arretier- und Öffnungsstellung;
- Figur 4: einen Vertikalschnitt nach Figuren 2 und 3 mit Verschluß in Öffnungsstellung und betätigtem Lösehebel;
- Figur 5: einen Vertikalschnitt durch ein drittes Ausführungsbeispiel einer erfindungsgemäßen Kanne;
- Figur 6: einen Teil eines Deckels nach Figur 5;
- Figur 7: einen Hebel nach Figur 6;
- Figur 8: eine Draufsicht auf den Hebel nach Figur 7;
- Figuren 9 u. 10: zwei Ansichten eines Deckelunterteils nach Figur 6;
- Figuren 11 u. 12: zwei Ansichten eines Verschlusses mit Verschlußträger nach Figur 5;
- Figur 13: eine vergrößerte Darstellung eines Details "X" aus Figur 5; und
- Figur 14: einen Vertikalschnitt durch einen oberen Abschnitt eines vierten Ausführungsbeispiels der erfindungsgemäßen Kanne.

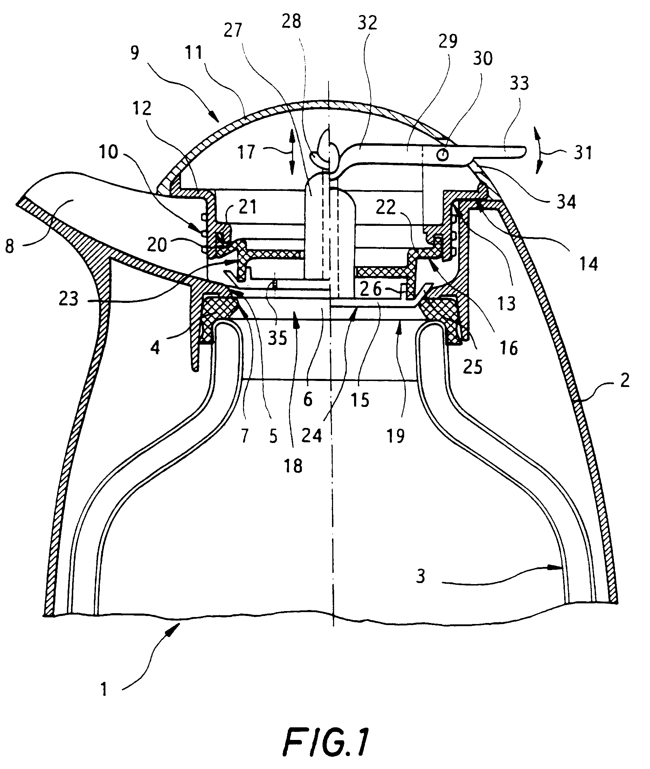

In Figur 1 ist eine Kanne 1 als Isolierkanne dargestellt. Sie weist einen äußeren Kannenmantel 2, der vorzugsweise aus Kunststoff besteht, und einen darin befindlichen Isolierkolben 3, wie er aus dem Stand der Technik zur Aufnahme und Isolierung von Flüssigkeiten hinreichend bekannt ist, auf. Der Isolierkolben 3 ist über einen Dichtring 4 aus Gummi gegen einen Öffnungsrand 5 des Kannenmantels gedrückt. Öffnungsrand 5 beziehungsweise Dichtring 4 bilden eine Ausgußöffnung 6.

Der Dichtring 4 hat etwa L-förmige Form und begrenzt mit einer Dichtlippe 7 die Ausgußöffnung 6. Zur linken Seite der Kanne 1 ist eine an der Ausgußöffnung 6 angrenzende Ausgußtülle 8 ausgebildet.

In der Figur 1 ist oberhalb der Ausgußöffnung 6 ist ein Deckel 9 angeordnet, der über einen Gewindeabschnitt 10 lösbar an dem Kannenmantel 2 befestigbar ist. Der Deckel 9 weist an seiner Oberseite eine kugelkalottenförmige Kappe 11 auf, die auf einem Deckelkörper 12 der den Gewindeabschnitt 10 trägt, aufgesetzt ist. Der Deckelkörper 12 weist einen Deckelabsatz 13 auf, der bei eingeschraubtem Deckel 9 in Anlage mit einer Stirnfläche 14 des Kannenmantels 2 ist, so daß der Deckelkörper beabstandet von dem Öffnungsrand 5 angeordnet ist.

An der Unterseite des Deckelkörpers 12 ist ein Verschluß 15 angeordnet, der über eine federelastische Membrane 16 mit dem Deckelkörper 12 verbunden ist. Der Verschluß 15 ist längs der durch den Pfeil 17 dargestellten im wesentlichen vertikalen Öffnungsbewegung bewegbar. Im linken Halbschnitt der Zeichnung ist der Verschluß 15 in der Öffnungsstellung 18 und in dem rechten Halbschnitt der Zeichnung in der Schließstellung 19 dargestellt.

Entsprechend ist die Membrane 16 in dem linken Halbschnitt verformt und in dem rechten Halbschnitt relativ unverformt dargestellt. Die Membrane 16 ist über einen Steg 20 in einer Ringnut 21 des Deckelkörper 12 gelagert. Daran schließt sich ein in Schließstellung 19 etwa horizontal angeordneter, ebener Kreisring 22 an, der die eigentliche Verformungswirkung der Membrane leistet. Direkt anschließend an den Kreisring 22 ist einstückig ein Rohrabschnitt 23 angeformt, der sich längs der Öffnungsbewegung erstreckt. An dem Rohrabschnitt 23 ist der Verschluß 15 angebracht. Die Membrane 16 besteht aus federelastischen Gummi.

Der Verschluß 15 hat einen etwa kreisrunden Boden 24 und einen daran außenseitig angrenzenden Dichtungsabschnitt 25. Der Dichtungsabschnitt 25 verjüngt sich in Richtung von der Öffnungsstellung 18 zur Schließstellung 19. In Schließstellung 19 liegt der Dichtungsabschnitt 25 an dem Öffnungsrand 5 und an der Dichtlippe 7 an. In Öffnungsstellung 18 ist er von beiden abgehoben, so daß die Ausgußöffnung 6 mit der Umgebung verbunden ist und Flüssigkeit aus dem Isolierkolben 3 über die Ausgußtülle 8 ausfließen kann. In Schließstellung liegt Dichtungsabschnitt 20 wärme- und flüssigkeitsdicht an der Dichtlippe 7 und Flüssigkeitsdicht an dem Öffnungsrand 5 an. In dem Boden 24 ist eine Entlüftungsöffnung 35 als Loch mit einem Durchmesser von etwa 0,2 mm angeordnet, die das Innere des Isolierkolbens 3 bei geschlossenem Verschluß 15 über das Innere des Deckel 9 mit der Umgebung verbindet.

Der Rohrabschnitt 23 ist von außen auf einem Rohrabsatz 26 des Bodens 24 aufgesteckt.

An den Boden 24 schließt sich mittig zur Oberseite des Deckels 9 ein Verschlußträger 27 an, in den an seiner Oberseite ein Haken 28 eines Hebels 29 eingreift. Der Hebel 29 dient als Handhabe und ist über ein Kipplager 30 in der durch den Pfeil 31 angedeuteten Schwenkrichtung kippbar. Ein erstes Ende 32 des Hebels 29 greift an dem Verschlußträgers 27 an, während sich ein zweites Ende 32 des Hebels 29 durch eine Durchgangsöffnung 34 der Kappe 11 zur Außenseite des Deckels 9 erstreckt. Aufgrund der exzentrischen Anordnung des Kipplagers 30 relativ zur Kannenlängsachse und der Bewegungsverbindung von Hebel 29 und Verschlußträger 27 ist die Öffnungsbewegung des Verschlusses nicht strikt vertikal, sondern ist in Richtung zum Kipplager gekrümmt.

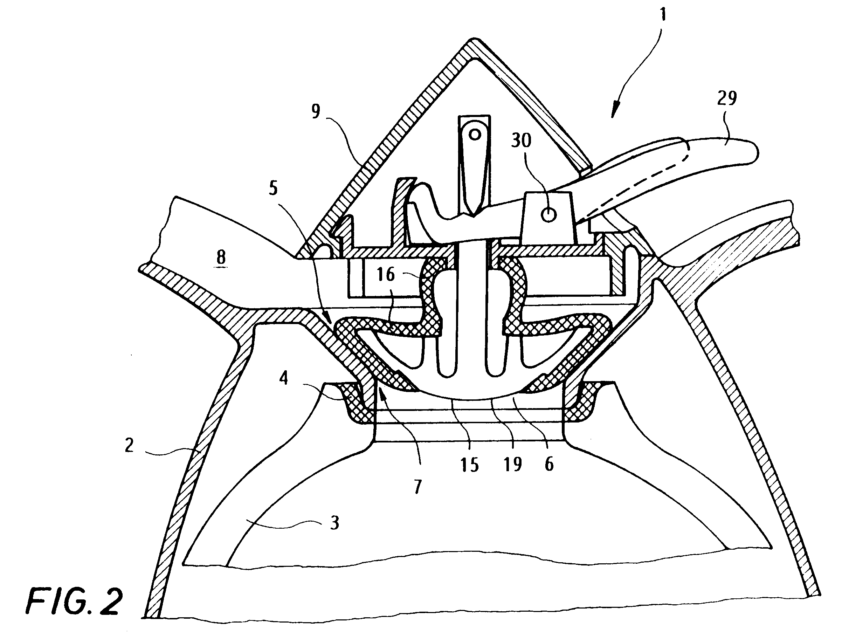

In den Figuren 2 bis 4 ist ein zweites Ausführungsbeispiel der erfindungsgemäßen Kanne dargestellt, wobei bezüglich gleicher Bezugszeichen auf die vorherige Beschreibung verwiesen werden kann.

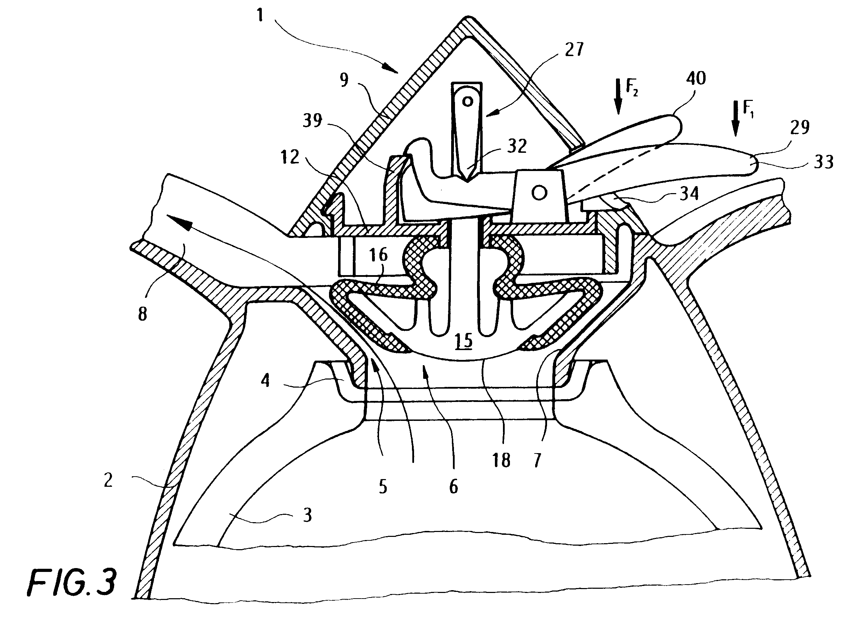

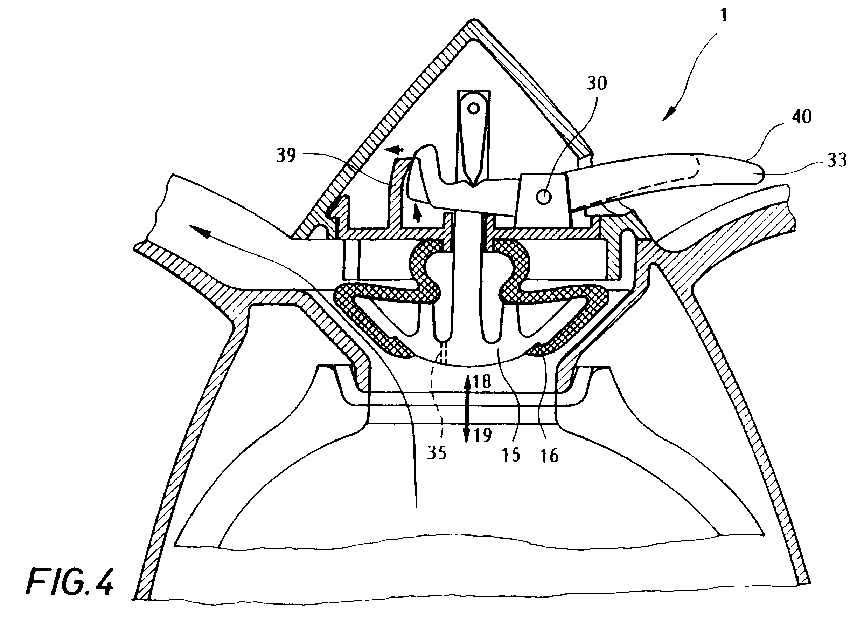

In den Figuren 2 bis 4 ist die Membran 16 wie bereits zuvor erwähnt, als Faltenbalg ausgebildet, der in der in Figur 2 dargestellten Schließstellung 19 relativ entspannt ist und in den Öffnungsstellungen 18 gemäß den Figuren 3 und 4 vertikal zusammengedrückt wird, wodurch auch die Rückstellkraft der Membran 6 erzeugt wird. Die Membran 6 bedeckt den Boden 24 zumindest im Bereich des Dichtungsabschnitts 25. Boden und Membran sind in Richtung Ausgußöffnung 6 konvex gekrümmt.

In den Figuren 2 und 4 ist zusätzlich zu dem Hebel 29 ein Federhebel 39 und ein Lösehebel 40 an dem Deckel 9 vorgesehen. Der Lösehebel 40 ist ebenfalls um das Kipplager 30 schwenkbar. Der Federhebel 39 ist integral mit dem Deckelkörper 12 ausgebildet. Er steht ungefähr in Öffnungsbewegung 17 vertikal nach oben. In Schließstellung liegt der Hebel 29 an dem Federhebel 39 seitlich an, wie in Figur 2 gezeigt. Der Lösehebel 40 ist etwa parallel zu dem Federhebel 39 angeordnet und liegt auch leicht an dem Federhebel 39 an. Der Federhebel kann senkrecht zu seiner Erstreckungsrichtung biegeelastisch ausgelenkt werden.

In Figur 3 ist eine arretierte Öffnungsstellung 18 dargestellt, bei der der Hebel 29 am zweiten Ende 33 nach unten gedrückt ist, so daß das erste Ende 32 den Verschluß 15 nach oben hebt. Dabei greift das erste Ende 32 mit einem Absatz über das Stirnende des Federhebels 39. Der Federhebel 39 wird beim Anheben des ersten Endes 32 zunächst zur Seite gedrückt und schnappt anschließend automatisch unter den Absatz des Hebels 29 zurück. Ist der Hebel 29 mit einer Öffnungskraft F₁ an seinem ersten Ende 32 nach unten gedrückt, so ist damit der Verschluß 15 automatisch über den Federhebel 39 in der Öffnungsstellung 18 arretiert. Der Lösehebel 40 verbleibt zunächst noch in der Ausgangsstellung gemäß Figur 2.

Zum Lösen der Arretierung gemäß Figur 4 wird der Lösehebel 40 an seinem außenseitigen Ende heruntergedrückt, so daß er mit seinem jeweils anderen Ende den Federhebel 39 leicht nach links auslenkt und aus der Arretierung mit dem Hebel 29 löst. Die dabei auf den Lösehebel 40 auszuübende Kraft F₂ ist relativ geringer als die größere Kraft F₁. Wenn nun beide Hebel wieder parallel nebeneinander angeordnet sind, so kann der Verschluß 15 wieder in die Schließstellung 19 überführt werden, in dem der Hebel 29 losgelassen wird und durch die Rückstellkraft der Membran 16 automatisch mit seinem ersten Ende 32 nach oben gedrückt wird.

Mit dem in den Figuren 2 bis 4 dargestellten Arretierungsprinzip läßt sich eine einfache Arretierung des Verschlusses 15 in der Öffnungsstellung 18 bewirken, so daß Flüssigkeit ausgegossen werden kann ohne ständig den Hebel 29 als Handhabe gedrückt halten zu müssen.

Es ist verständlich, daß die Membran 16 beispielsweise auch als äußerst elastischer und verformungsfähiger Vollgummi ausgebildet sein kann, wobei sie den Boden 24 des Verschlusses 15 vollständig bedeckt.

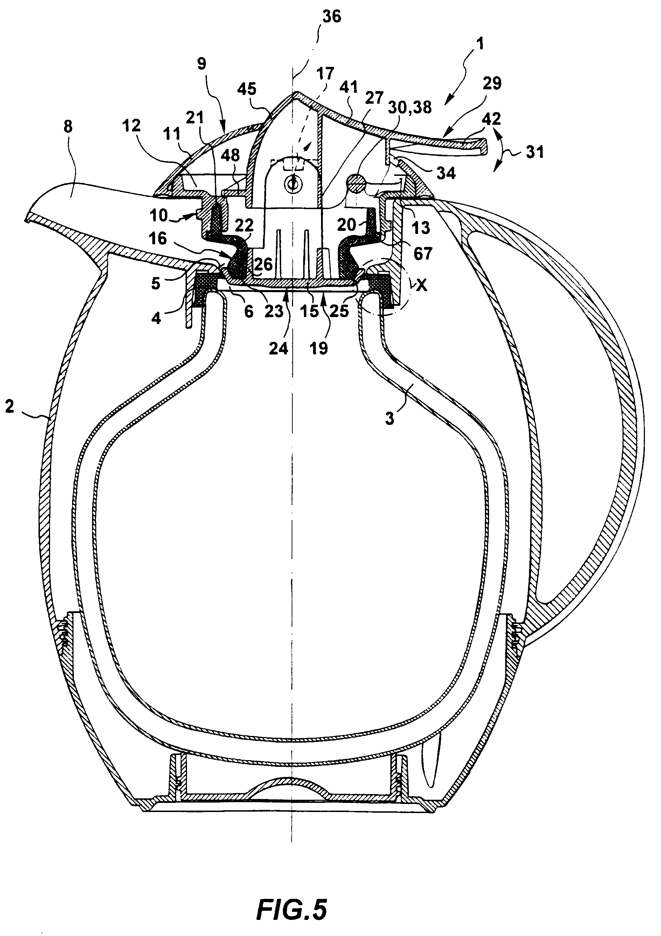

In Figur 5 ist ein drittes Ausführungsbeispiel für eine erfindungsgemäße Kanne 1 dargestellt. Gleiche Teile sind wiederum mit gleichen Bezugszeichen versehen und werden nur noch teilweise erwähnt. Das dritte Ausführungsbeispiel der Kanne unterscheidet sich von den bisher dargestellten Ausführungsbeispielen insbesondere durch einen anderen Hebelmechanismus, eine andere Verbindung zwischen Hebel und Verschluß und in der Form der Membran 16.

Die Membran ist wie beim ersten Ausführungsbeispiel mittels ihres Rohrabschnitts 23 am Verschluß 15 zwischen Dichtungsabschnitt 25 und Rohrabsatz 26 reibungsschlüssig gehalten. Am oberen Ende des Rohrabsatzes 26 weist die Membran einen Kreisring 22 auf, der radial nach außen vom Rohrabschnitt absteht. Im wesentlichen am Außenumfang des Kreisrings 22 steht ein Membransteg 20 parallel zur Kannenlängsachse 36 nach oben ab und ist in die Ringnut 21 im Deckelkörper 12 eingesetzt. Weiterhin weist die Membran 16 am unteren Ende des Stegs 20 einen Absatz 67 auf, der mit einem entsprechenden Gegenabsatz am Gewindeabschnitt 10 des Deckelkörpers 12 in Anlage ist.

In Figur 5 ist der Verschluß 15 in Schließstellung 19 dargestellt. Der Dichtungsabschnitt 25 liegt am Dichtring 4 an. Je nach Ausbildung des Dichtrings kann der Dichtabschnitt an diesem und am Öffnungsrand 5 oder auch nur am Öffnungsrand 5 anliegen.

Zum Öffnen des Verschlusses 15 weist dieser auf seiner Oberseite den Verschlußträger 27 auf, der mit dem Hebel 29 bewegungsverbunden ist. Durch Betätigen des Hebels in Schwenkrichtung 31 führt der Verschlußträger 27 im wesentlichen die gekrümmte Öffnungsbewegung 17 durch. Diese entspricht einem Kreisbogen mit Kipplager 30, beziehungsweise das Kipplager bildender Lagerachse 38 als Mittelpunkt. Die Lagerachse 38 ist exzentrisch zur Kannenlängsachse 36 angeordnet, wobei der Verschlußträger 27 und der Verschluß 15 in Schließstellung 19 symmetrisch zur Kannenlängsachse 38 angeordnet sind.

Der Hebel 29 nach Figur 5 ist im wesentlichen L-förmig mit einem längeren L-Schenkel 41 und einem kürzeren L-Schenkel 45. Am freien Ende des längeren L-Schenkels 41 ist ein flacher Betätigungsabschnitt 42 angeordnet. Der längere L-Schenkel 41 und teilweise der kürzere L-Schenkel 45 stehen aus der Durchgangsöffnung 34 in Kappe 11 nach außen vor. Die Durchgangsöffnung 34 erstreckt sich von benachbart zum Rand der Kappe 11 bis über die Kannenlängsachse 36 hinaus.

Der längere L-Schenkel 41 ist konkav und der kürzere L-Schenkel 45 konvex nach außen gekrümmt. Die Krümmung des kürzeren L-Schenkel 45 entspricht dabei der Krümmung eines Kreisbogens mit Lagerachse 38 als Mittelpunkt.

Auf der Außenseite des kürzeren L-Schenkels 45 steht ein Anschlagflansch 48 senkrecht ab. Dieser kann durch Anlage von oben auf dem Deckelabsatz 13 gegenenfalls die Schwenkbewegung der Handhabe 29 in Anlagerichtung begrenzen. Allerdings ist eine vollständige Abdichtung der Ausgußöffnung 6 durch Verschluß 15 und/oder Membran 16 auf jeden Fall bereits vor Anlage des Anschlagflansches 48 an Deckelabsatz 13 realisiert.

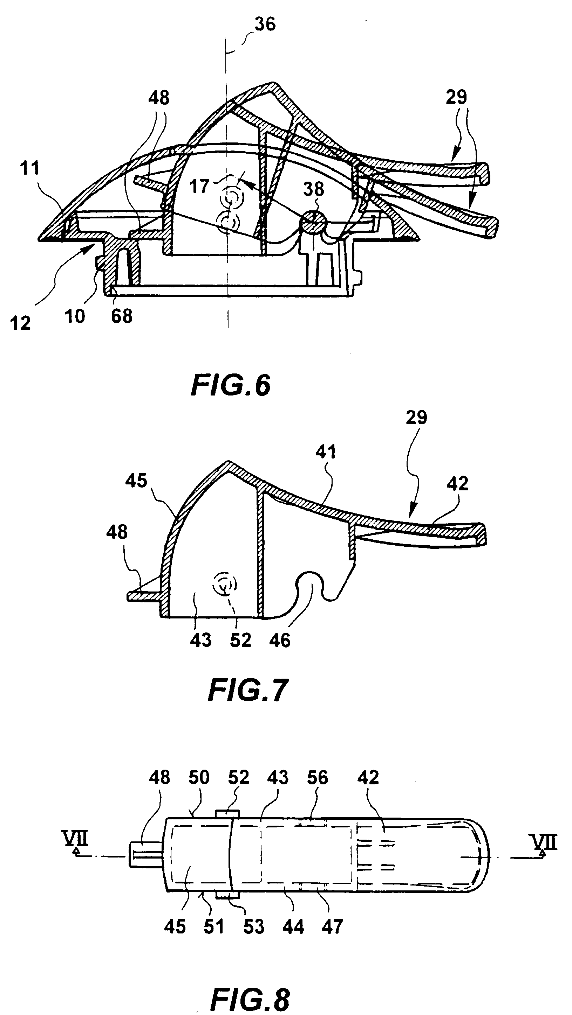

In Figur 6 ist Kappe 11 mit Deckelkörper 12 und Hebel 29 im Detail dargestellt. Der Hebel 29 ist entsprechend zur Schließstellung und zur Öffnungsstellung des Verschlusses, siehe Figur 5, in zwei verschiedenen Stellungen dargestellt. Dabei bewegt sich ein durch Lageraugen gebildeter Aufhängepunkt für den Verschlußträger entlang der Öffnungsbewegung 17, die in Richtung Schließstellung tangential in die Kannenlängsachse 36 mündet. Je nach Verbindung zwischen Hebel und Verschluß vollführt der Verschluß eine analoge bogenförmige Öffnungsbewegung, siehe Figur 1 und Figur 5, oder durchläuft eine vertikale Öffnungsbewegung, siehe Figur 2 bis 4.

In Figur 6 ist die Membran nicht dargestellt, so daß der Gegenabsatz 68 für den Absatz 67, siehe Figur 5, am Gewindeabschnitt 10 des Deckelkörpers 12 gut sichtbar ist.

In den Figuren 7 und 8 ist ein Schnitt durch den Hebel 29 und eine Draufsicht auf den Hebel dargestellt, wobei Figur 7 einem Schnitt entlang der Linie VII-VII aus Figur 8 entspricht.

Die beiden L-Schenkel 41 und 45 des Hebels 29 sind außerhalb des Betätigungsabschnitts 42 durch Seitenwände 43 und 44 miteinander verbunden. In jeder Seitenwand ist auf deren Unterseite eine nach unten offene Rastausnehmung 46, beziehungsweise 47 ausgebildet. Diese dient zum Aufrasten des Hebels 29 auf Lagerachse 38, siehe Figur 6.

Durch die Seitenwände 43, 44 und die L-Schenkel 41, 45 wird ein nur nach unten offener Körper gebildet, der gemäß Figur 5 zumindest teilweise aus der Durchgangsöffnung 34 des Deckels 9 vorsteht.

Auf Außenseiten 50, 51 der Seitenwände 43, 44 sind Lageraugen 52, 53 angeordnet, an denen der Verschlußträger 27 nach Figur 5 verschwenkbar gelagert ist.

Zur Versteifung des Hebels 29 sind weitere Quer- oder Verbindungswände zwischen den Seitenwänden 46 und 47 oder zwischen Anschlagflansch 48 und L-Schenkel 45 angeordnet.

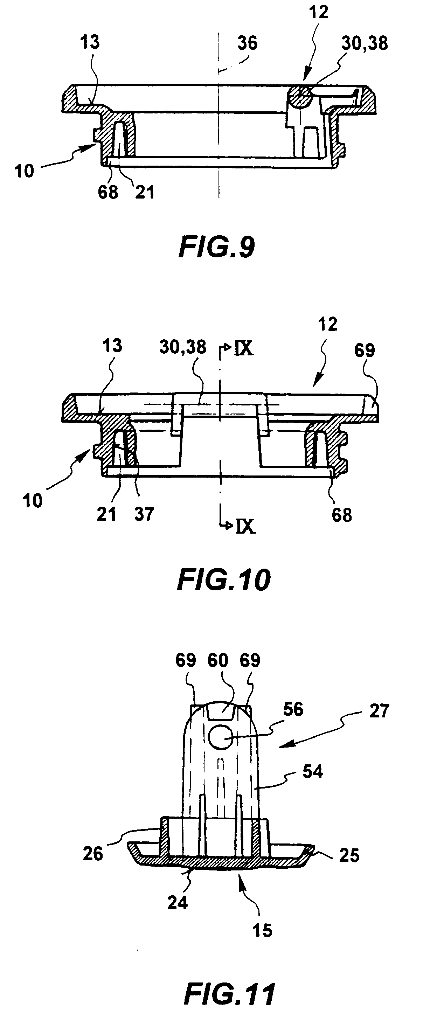

In den Figuren 9 und 10 sind zwei Schnitte durch den Deckelkörper 12 dargestellt, wobei Figur 9 einem Schnitt entlang der Linie IX-IX aus Figur 10 entspricht. Es ist erkennbar, daß das Kipplager 30, beziehungsweise die Lagerachse 38 exzentrisch zur Kannenlängsachse 36 angeordnet ist. Im Bereich der Lagerachse 38, die sich im wesentlichen horizontal erstreckt, ist die Ringnut 21 unterbrochen. Die Ringnut 21 ist dabei auf der Innenseite des Gewindeabschnitts 10 angeordnet, wobei dieser an seinem unteren Ende mit dem Gegenabsatz 68 ausgebildet ist. Der Deckelabsatz 13 kann eine Stufe aufweisen, wobei die radial über den Gewindeabschnitt 10 nach außen vorstehende Stufe höher als die oberhalb der Ringnut 21 angeordnete Stufe ist.

Zur Verbindung von Kappe und Deckelkörper 12 können entsprechende Rast- und Gegenrasteinrichtungen an beiden ausgebildet sein. Zur gegenseitigen Orientierung kann der Deckelkörper 2 am Umfang beispielsweise eine Orientierungsöffnung 69 aufweisen, in die ein entsprechender Vorsprung an der Deckelkappe 11 eingreift.

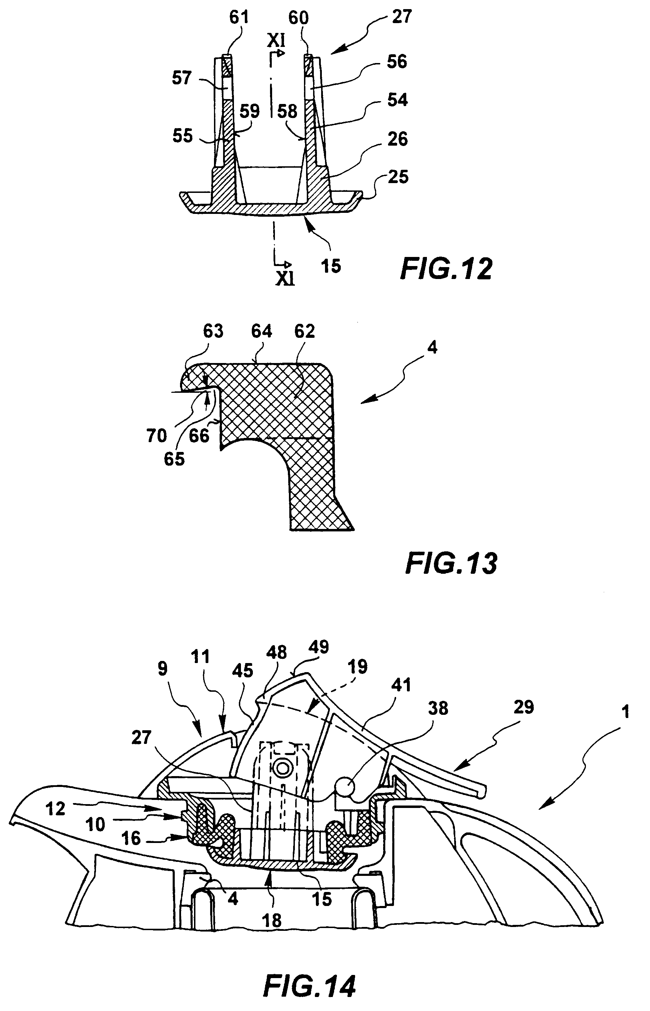

In den Figuren 11 und 12 sind zwei verschiedene Schnitte durch den Verschlußträger 27 mit Verschluß 15 dargestellt, wobei Figur 11 einem Schnitt entlang der Linie XI-XI aus Figur 12 entspricht.

Der Verschluß 15 weist einen kreisrunden Boden 24 auf, von dem ein Dichtungsabschnitt 25 am Umfang schräg nach oben absteht. Auf einer Oberseite des Verschlusses 15 ist der Rohrabsatz 26 angeordnet, der in Richtung Kannenlängsachse verläuft. Einteilig mit dem Rohrabsatz sind Lagerarme 54 und 55 ausgebildet, die vom Rohrabsatz nach oben abstehen. Die Lagerarme sind einander gegenüberliegend angeordnet und weisen Lageröffnungen 56 und 57 auf. Diese dienen zur Aufnahme der Lageraugen 52 und 53, siehe Figur 8.

Auf Innenseiten 58, 59 der Lagerarme 54, 55 sind an deren oberen Enden und oberhalb der Lageröffnungen 56 und 57 Einführschrägen 60, 61 ausgebildet. Diese steigen rampenförmig in Richtung der Lageröffnungen an.

Zur Versteifung der Lagerarme verlaufen entsprechende Streben zwischen diesen und der Oberseite des Verschlusses 15 oder dem Rohrabsatz 26. Weiterhin können in den Lagerarmen Versteifungssäulen 69 integriert sein.

In Figur 13 ist ein Detail "X" des Dichtrings nach Figur 5 vergrößert dargestellt. Der Dichtring 4 nach Figur 13 weist im Gegensatz zu dem Dichtring 4 nach Figur 1 eine Dichtlippe 63 auf, die nasenartig radial nach innen vom übrigen Dichtkörper 62 vorsteht. Die Oberseiten 64 von Dichtlippe 63 und Dichtkörper 62 sind flächenbündig zueinander angeordnet. Eine Unterseite 65 der Dichtlippe 63 verläuft schräg in Richtung einer Innenwand 66 des Dichtkörpers 62 unter einem Winkel 70 nach oben. Der Winkel 70 ist kleiner gleich 20°, vorzugsweise 8° bis 12°. Der übrige Aufbau des Dichtrings 4 entspricht dem des Dichtrings nach Figur 1.

In Figur 14 ist ein viertes Ausführungsbeispiel für eine erfindungsgemäße Kanne dargestellt. Gleiche Bezugszeichen kennzeichnen wiederum gleiche Teile und werden nur noch teilweise erwähnt.

Im Unterschied zum dritten Ausführungsbeispiel ist der Hebel 29 anders gestaltet. In Figur 14 ist der Verschluß 15 in Öffnungsstellung 18 dargestellt. Die entsprechende Schließstellung 19 ist strichliniert im Hebel 29 dargestellt.

Der übrige Aufbau von Membran 16, Verschluß 15, Verschlußträger 27 und Hebel 29 entspricht dem des dritten Ausführungsbeispiels nach Figur 5, siehe auch Figuren 6 bis 12. Außerdem ist beim vierten Ausführungsbeispiel ein Dichtring mit einem Querschnitt nach Figur 13 einsetzbar.

Im folgenden wird die Handhabung und Funktionsweise der dargestellten Ausführungsbeispiele kurz beschrieben.

Nach Aufschrauben des Deckels 9 auf Kanne 1 liegt der Verschluß mit seinem Dichtungsabschnitt 25, beziehungsweise die auf den Boden des Verschlusses aufgummierte Membran am Dichtring und/oder am Öffnungsrand an. In dieser Schließstellung ist die Membran 16 etwas ausgelenkt und vorgespannt, so daß der Verschluß 15 kraftbelastet die Ausgußöffnung 6 schließt. Diese Kraftbelastung ist für eine wärme- und flüssigkeitsdichte Abdichtung ausreichend.

Um Flüssigkeit aus der Kanne 1 ausgießen zu können, wird der Verschluß durch Ein-Hand-Bedienung gegen die Kraftbelastung durch die Membran 16 entlang einer vertikalen, einer von der Kannenlängsachse nach außen gekrümmten oder mittels einer Kippbewegung vollständig oder zumindest im Bereich der Ausgußtülle 8 nach oben bewegt. Dadurch wird die Ausgußöffnung 6 wenigstens im Bereich der Ausgußtülle 8 freigegeben. Je nach Grad der Anhebung des Verschlusses 15 wird durch die Membran eine entsprechende Rückstellkraft ausgeübt. Die Öffnungsbewegung des Verschlusses kann durch einen Hebelmechanismus oder durch andere an sich bekannte Drehknöpfe oder ähnliches bewirkt werden.

Solange der Verschluß in der Öffnungsstellung 18 gehalten wird, kann Flüssigkeit ausgegossen werden.

Die Rückstellung des Verschlusses in die Schließstellung 19 erfolgt beispielsweise durch Loslassen des Hebels 29, wodurch sich wieder eine dichtende Verbindung zum Verbindungsrand 5 und/oder zur Dichtlippe 7, 63 hergestellt wird. Dabei verbindet die Membran gleichzeitig den Deckelkörper 12 flüssigkeitsdicht mit dem Verschluß 15 und/oder dem Verschlußträger 27. Dadurch kann auch beim Ausgießen der Flüssigkeit keine Flüssigkeit in das Innere des Deckels gelangen.

## Patentansprüche

1. Kanne (1) für Flüssigkeiten, insbesondere Isolierkanne, bei der eine von einem Öffnungsrand (5) gebildete Ausgußöffnung (6) mittels eines lösbar an der Kanne (1) befestigten Deckels (9) verschließbar ist, und der Deckel (9) einen über eine Handhabe (29) bewegbaren, in Richtung einer Schließstellung (19) durch ein Federelement (16) kraftbelasteten Verschluß (15) aufweist, der an einem beabstandet zu dem Öffnungsrand (5) vorgesehenen, separaten Deckelkörper (12) bewegbar gehalten ist und über eine im wesentlichen vertikale Öffnungsbewegung (17) zwischen einer die Ausgußöffnung (6) freigebenden Öffnungsstellung (18) und der die Ausgußöffnung (6) verschließenden Schließstellung (19) bewegbar ist, wobei der Verschluß (15) in Öffnungsstellung im wesentlichen vertikal nach oben von der Ausgußöffnung (6) ausgelenkt ist,
**dadurch gekennzeichnet,**
daß das Federelement (16) durch eine federelastische, den Verschluß (15) mit dem Deckelkörper (12) verbindende Membran (16) gebildet ist, die in Öffnungsstellung (18) unter Vorspannung, eine Rückstellkraft in Richtung Schließstellung erzeugend, verformt ist, wobei die Membran (16) an dem Deckelkörper (12) gelagert und separat dazu ausgebildet ist.

2. Kanne nach Anspruch 1,
**dadurch kennzeichnet,**
daß die Membran (16) sich zumindest teilweise quer zur Öffnungsbewegung (17) des Verschlusses (15) erstreckt.

3. Kanne nach Anspruch 1 oder 2,
**dadurch gekennzeichnet,**
daß die Membran (16) zumindest teilweise als ebener Kreisring (22) ausgebildet ist.

4. Kanne nach wenigstens einem der vorhergehenden Ansprüche,
**dadurch gekennzeichnet,**
daß die Membran (16) einen ziehharmonikaartigen Faltenbalg aufweist.

5. Kanne nach wenigstens einem der vorhergehenden Ansprüche,
**dadurch gekennzeichnet,**
daß der Verschluß (15) in seiner Schließstellung (19) an einem Öffnungsrand (5) der Ausgußöffnung (6) und/oder an einem die Ausgußöffnung (6) umgebenden Dichtring (4) anliegt.

6. Kanne nach wenigstens einem der vorhergehenden Ansprüche,
**dadurch gekennzeichnet,**
daß die Membran (16) den Verschluß (15) mit dem Deckelkörper (12) flüssigkeitsdicht verbindet.

7. Kanne nach wenigstens einem der vorhergehenden Ansprüche,
**dadurch gekennzeichnet,**
daß die Membran (16) mit dem Verschluß (15) über einen sich etwa längs zur Öffnungsbewegung (17) erstreckenden Rohrabschnitt (23) verbunden ist.

8. Kanne nach Anspruch 7,
**dadurch gekennzeichnet,**
daß der Rohrabschnitt (23) einstückig mit der Membran (16) ausgebildet ist.

9. Kanne nach wenigstens einem der vorangehenden Ansprüche 7 und 8
**dadurch gekennzeichnet,**
daß der Rohrabschnitt (23) mit dem Innen- oder Außenumfang des Kreisrings (22) und dieser über den jeweils verbleibenden Umfang mit dem Deckelkörper (12) verbunden ist.

10. Kanne nach wenigstens einem der vorangehenden Ansprüche,
**dadurch gekennzeichnet,**
daß die Membran (16) einen im wesentlichen umlaufenden Steg (20) aufweist, der in einer Nut (21) des Deckelkörpers (12) gelagert ist.

11. Kanne nach wenigstens einem der vorangehenden Ansprüche,
**dadurch gekennzeichnet,**
daß in dem Verschluß (15) eine das Kannenvolumen mit der Umgebung verbindende Entlüftungsöffnung (35) vorgesehen ist.

12. Kanne nach wenigstens einem der vorangehenden Ansprüche,
**dadurch gekennzeichnet,**
daß der Verschluß (15) in der Öffnungsstellung (18) arretiert ist und über einen Lösehebel (40) aus der Arretierung entkoppelbar ist.

13. Kanne nach Anspruch 12,
**dadurch gekennzeichnet,**
daß der Deckel (9) einen Federhebel (31) aufweist, an dem die Handhabe (29) in Öffnungsstellung (18) arretiert ist und der durch den Lösehebel (40) aus der Arretierstellung mit der Handhabe (29) auslenkbar ist.

14. Kanne nach wenigstens einem der vorangehenden Ansprüche,
**dadurch gekennzeichnet,**
daß der Verschluß (15) einen die Ausgußöffnung (6) in Schließstellung (19) verschließenden Dichtungsabschnitt (25) aufweist.

15. Kanne nach wenigstens einem der vorangehenden Ansprüche,
**dadurch gekennzeichnet,**
daß die Membran (16) einen Boden (24) des Verschlusses (15) zumindest gegenüberliegend zum Öffnungsrand (5) und/oder Dichtring (4) bedeckt.

16. Kanne nach Anspruch 15,
**dadurch gekennzeichnet,**
daß der Boden (24) voll mit der Membran (16) gummiert ist.

17. Kanne nach wenigstens einem der vorangehenden Ansprüche 15 und 16,
**dadurch gekennzeichnet,**
daß Boden (24) und/oder die diesen bedeckende Membran (16) konvex gekrümmt sind.

18. Kanne nach wenigstens einem der vorangehenden Ansprüche,
**dadurch gekennzeichnet,**
daß die Handhabe (29) als im Deckel (9) gelagerter, zweiarmiger Hebel (29) ausgebildet ist, dessen Kipplager (30) exzentrisch zur Kannenvertikalachse (36) angeordnet ist.

19. Kanne nach wenigstens einem der vorangehenden Ansprüche 10-18,
**dadurch gekennzeichnet,**
daß der Deckel (9) eine Kappe (11) und einen diesen tragenden, an seinem unteren Ende einen Gewindeabschnitt (10) aufweisenden Deckelkörper (12) umfaßt, wobei die Nut (21) zum Lagern des Membranstegs (20) auf einer Innenseite (37) des Gewindeabschnitts (10) angeordnet ist.

20. Kanne nach wenigstens einem der vorangehenden Ansprüche 18 und 19,
**dadurch gekennzeichnet,**
daß der Deckelkörper (12) oberhalb des Gewindeabschnitts (10) einen Deckelabsatz (13) aufweist, an welchem das Kipplager (30) angeordnet ist.

21. Kanne nach wenigstens einem der vorangehenden Ansprüche 18-20,
**dadurch gekennzeichnet,**
daß das Kipplager (30) als sich horizontal erstreckende Lagerachse (38) ausgebildet ist.

22. Kanne nach Anspruch 21,
**dadurch gekennzeichnet,**
daß der Hebel (29) im wesentlichen L-förmig ist, wobei ein längerer L-Schenkel (41) einen flachen Betätigungsabschnitt (42) an seinem freien Ende aufweist und Seitenwände (43, 44) die beiden L-Schenkel (41, 45) zumindest außerhalb des Betätigungsabschnitts (42) miteinander verbinden, wobei am unteren Ende dieser Seitenwände (43, 44) Rastausnehmungen (46, 47) zum Aufrasten auf die Lagerachse (38) ausgebildet sind.

23. Kanne nach Anspruch 22,
**dadurch gekennzeichnet,**
daß auf Außenseiten (50, 51) der Seitenwände (43, 44) Lageraugen (52, 53) zur verschwenkbaren Lagerung eines mit dem Verschluß (15) verbundenen Verschlußträgers (27) abstehen.

24. Kanne nach Anspruch 23,
**dadurch gekennzeichnet,**
daß der Verschlußträger (27) zwei von dem Verschluß (15) nach oben in Richtung Kappe (11) abstehende Lagerarme (54, 55) aufweist, welche benachbart zu ihren oberen Ende Lageröffnungen (56, 57) zur Aufnahme der Lageraugen (52, 53) aufweisen und an den oberen Enden und auf gegenüberliegenden Innenseiten (58, 59) der Lagerarme (54, 55) in Richtung der Lageröffnungen (56, 57) verlaufende Einführschrägen (60, 61) ausgebildet sind.

25. Kanne nach wenigstens einem der vorangehenden Ansprüche,
**dadurch gekennzeichnet,**
daß der Dichtring (4) eine von einem auf einem Isolierkolben (3) aufliegenden Dichtkörper (62) im wesentlichen radial in Richtung Ausgußöffnung (6) vorstehende Dichtlippe (63) aufweist.

26. Kanne nach Anspruch 25,
**dadurch gekennzeichnet,**
daß eine Oberseite (64) der Dichtlippe (63) flächenbündig zur Oberseite des Dichtkörpers (62) angeordnet ist und eine Unterseite (65) der Dichtlippe (63) in etwa senkrecht zur Innenwand (66) des Dichtkörpers (62) verläuft.

27. Kanne nach wenigstens einem der vorangehenden Ansprüche 25 und 26,
**dadurch gekennzeichnet,**
daß die Unterseite (65) der Dichtlippe (63) unter einem Winkel kleiner gleich 20°, vorzugsweise 8° bis 12°, in Richtung zur Innenwand (66) des Dichtkörpers (62) nach oben geneigt verläuft.

28. Kanne nach wenigstens einem der vorangehenden Ansprüche,
**dadurch gekennzeichnet,**
daß die Membran (16) in Schließstellung (19) die Ausgußöffnung (6) verschließend an dem Öffnungsrand (5) anliegt.

29. Kanne nach wenigstens einem der vorangehenden Ansprüche,
**dadurch gekennzeichnet,**
daß der Deckel (9) einen Gewindeabschnitt (10) aufweist, über den der Deckel (9) lösbar an der Kanne (1) befestigt ist.

## Claims

1. A flask (1) for liquids, in particular an insulating flask, in which a pouring aperture (6) which is formed by an aperture edge (5) can be closed by means of a lid (9) which can be releasably attached to said flask (1), and said lid (9) comprises a closure element (15) which can be moved by means of a handle (29) and which is loaded by a spring element (16) towards a closed position (19) and is movably held on a separate lid body (12) provided in spaced relationship with said aperture edge (5) and is movable via a substantially vertical opening movement (17) between an open position (18) in which said pouring aperture (6) is released and the closed position (19) in which said pouring aperture (6) is closed, with said closure element (15) in the open position being deflected substantially vertially upwards from the pouring aperture (6),
**characterized in**
that said spring element (16) is formed by a spring-elastic diaphragm (16) which connects said closure element (15) to said lid body (12) and which in the open position (18) under a bias is deformed producing a restoring force in the direction of the closed position, with said diaphragm (16) being supported on said lid body (12) and being separately formed with respect thereto.

2. The flask according to claim 1,
**characterized in**
that said diaphragm (16) extends at least partly in a direction transverse to the opening movement (17) of said closure element (15).

3. The flask according to claim 1 or 2,
**characterized in**
that said diaphragm (16) is formed at least in part as a planar circular ring (22).

4. The flask according to at least one of the preceding claims,
**characterized in**
that said diaphgram (16) comprises concertina-like bellows.

5. The flask according to at least one of the preceding claims,
**characterized in**
that said closure element (15) in its closed position (19) rests on an aperture edge (5) of said pouring aperture (6) and/or on a sealing ring (4) surrounding said pouring aperture (6).

6. The flask according to at least one of the preceding claims,
**characterized in**
that said diaphragm (16) connects said closure element (15) in liquidproof fashion to said lid body (12).

7. The flask according to at least one of the preceding claims,
**characterized in**
that said diaphragm (16) is connected to said closure element (15) via a tubular section (23) which extends approximately in a direction along the opening movement (17).

8. The flask according to claim 7,
**characterized in**
that said tubular section (23) is integrally formed with said diaphragm (16).

9. The flask according to at least one of the preceding claims 7 and 8,
**characterized in**
that said tubular section (23) is connected to the inner or outer circumference of the circular ring (22) and said ring is connected via the respectively remaining circumference to said lid body (12).

10. The flask according to at least one of the preceding claims,
**characterized in**
that said diaphragm (16) comprises a substantially surrounding web (20) which is supported in a groove (21) of said lid body (12).

11. The flask according to at least one of the preceding claims,
**characterized in**
that a vent (35) which connects the volume of the flask to the surroundings is provided in said closure element (15).

12. The flask according to at least one of the preceding claims,
**characterized in**
that said closure element (15) is locked in the open position (18) and can be unlocked through a release lever (40) from the locked position.

13. The flask according to claim 11,
**characterized in**
that said lid (9) comprises a spring lever (31) on which said handle (29) is locked in the open position (18) and which can be displaced by said release lever (40) from the locked position with said handle (29).

14. The flask according to at least one of the preceding claims,
**characterized in**
that said closure element (15) includes a sealing section (25) which seals said pouring aperture (6) in the closed position (19).

15. The flask according to at least one of the preceding claims,
**characterized in**
that said diaphragm (16) covers a bottom (24) of said closure element (15) at least in a direction opposite to the aperture edge (5) and/or sealing ring (4).

16. The flask according to claim 15,
**characterized in**
that said bottom (24) is fully gummed with said diaphragm (16).

17. The flask according to at least one of the preceding claims 15 and 16,
**characterized in**
that said bottom (24) and/or said diaphragm (16) which covers said bottom is/are convexly curved.

18. The flask according to at least one of the preceding claims,
**characterized in**
that said handle (29) is formed as a two-armed lever (29) which is supported in said lid (9) and the tilt bearing (30) of which is eccentrically arranged relative to the vertical axis (36) of said flask.

19. The flask according to at least one of the preceding claims 10 to 18,
**characterized in**
that said lid (9) comprises a cap (11) and a lid body (12) which carries said lid and includes a threaded section (10) at its lower end, with a groove (21) for supporting the diaphragm web (20) being arranged on an inside (37) of said threaded section (10).

20. The flask according to at least one of the preceding claims 18 and 19,
**characterized in**
that above said threaded section (10) said lid body (12) has a lid shoulder (13) which has disposed thereon said tilt bearing (30).

21. The flask according to at least one of the preceding claims 18 to 20,
**characterized in**
that said tilt bearing (30) is designed as a horizontally extending bearing axis (38).

22. The flask according to claim 21,
**characterized in**
that said lever (29) is substantially L-shaped, with a longer L-leg (41) comprising a flat actuation section (42) at its free end and side walls (43, 44) interconnecting the two L-legs (41, 45) at least outside said actuation section (42), with snap type recesses (46, 47) being formed at the lower end of said side walls (43, 44) to be snapped onto the bearing axis (38).

23. The flask according to claim 22,
**characterized in**
that bearing eyes (52, 53) project at exterior sides (50, 51) of said side walls (43, 44) for pivotably supporting a closure carrier (27) connected to said closure element (15).

24. The flask according to claim 23,
**characterized in**
that said closure carrier (27) comprises two bearing arms (54, 55) which project from said closure element (15) upwards towards cap (11) and which next to their upper ends comprise bearing openings (56, 57) for receiving said bearing eyes (52, 53), and that inclined insertion portions (60,61) which extend in the direction of said bearing openings (56, 57) are formed on the upper ends and at opposite inner sides (58, 59) of said bearing arms (54, 55).

25. The flask according to at least one of the preceding claims,
**characterized in** that the sealing ring (4) comprises a sealing lip (63) which projects from a sealing body (62), resting on an insulating insert (3), substantially radially towards pouring aperture (6).

26. The flask according to claim 25,
**characterized in**
that an upper side (64) of said sealing lip (63) is arranged in surface alignment with the upper side of said sealing body (62) and a bottom side (65) of said sealing lip (63) extends in a direction approximately perpendicular to the inner wall (66) of said sealing body (62).

27. The flask according to at least one of the preceding claims 25 and 26,
**characterized in**
that the bottom side (65) of said sealing lip (63) extends upwards in inclined fashion at an angle smaller than/equal to 20°, preferably 8° to 12°, towards the inner wall (66) of said sealing body (62).

28. The flask according to at least one of the preceding claims,
**characterized in**
that said diaphragm (16) in the closed position (19) rests on said aperture edge (5) closing said pouring aperture (6).

29. The flask according to at least one of the preceding claims,
**characterized in**
that said lid (9) has a threaded portion (10) via which said lid (9) is detachably secured to said flask (1).

## Revendications

1. Broc (1) pour liquides, en particulier broc isolant, dans lequel un orifice d'écoulement (6) formé par un rebord d'ouverture (5) peut être obturé au moyen d'un couvercle (9) fixé de façon amovible sur le broc (1), et dans lequel le couvercle (9) comporte une fermeture (15) déplaçable par un dispositif de maniement (29) et soumise à une force exercée par un élément élastique (16) en direction de la position fermée (19), laquelle fermeture est maintenue mobile sur un corps de couvercle (12) séparé et placé à distance du rebord d'ouverture (5) et est déplaçable par un mouvement d'ouverture (17) essentiellement vertical entre une position ouverte (18) dégageant l'orifice d'écoulement (6) et la position fermée (19) obturant l'orifice d'écoulement (6), la fermeture (15), en position ouverte, étant écartée essentiellement verticalement vers le haut de l'orifice d'écoulement (6), caractérisé en ce que l'élément élastique (16) est formé par une membrane (16) élastique reliant la fermeture (15) au corps de couvercle (12), qui est déformée en position ouverte (18) sous précontrainte, engendrant une force de rappel en direction de la position fermée, la membrane (16) étant logée sur le corps de couvercle (12) et réalisée à part.

2. Broc selon la revendication 1, caractérisé en ce que la membrane (16) s'étend, au moins en partie, perpendiculairement au mouvement d'ouverture (17) de la fermeture (15).

3. Broc selon la revendication 1 ou 2, caractérisé en ce que la membrane (16) est réalisée, au moins en partie, sous forme d'anneau de cercle (22) plan.

4. Broc selon l'une au moins des revendications précédentes, caractérisé en ce que la membrane (16) présente un soufflet en accordéon.

5. Broc selon l'une au moins des revendications précédentes, caractérisé en ce que la fermeture (15) adhère dans sa position fermée (19) à un rebord d'ouverture (5) de l'orifice d'écoulement (6) et/ou à une bague d'étanchéité (4) entourant l'orifice d'écoulement (6).

6. Broc selon l'une au moins des revendications précédentes, caractérisé en ce que la membrane (16) relie la fermeture (15) au corps de couvercle (12) de manière étanche au liquide.

7. Broc selon l'une au moins des revendications précédentes, caractérisé en ce que la membrane (16) est reliée à la fermeture (15) par l'intermédiaire d'un segment tubulaire (23) s'étendant sensiblement en sens longitudinal par rapport au mouvement d'ouverture (17).

8. Broc selon la revendication 7, caractérisé en ce que le segment tubulaire (23) est réalisé de manière solidaire avec la membrane (16).

9. Broc selon l'une au moins des revendications précédentes 7 et 8, caractérisé en ce que le segment tubulaire (23) est relié à la circonférence intérieure ou extérieure de l'anneau de cercle (22) et celui-ci au corps de couvercle (12) par la circonférence restante.

10. Broc selon l'une au moins des revendications précédentes, caractérisé en ce que la membrane (16) présente une traverse (20) essentiellement périphérique, qui est logée dans une rainure (21) du corps de couvercle (12).

11. Broc selon l'une au moins des revendications précédentes, caractérisé en ce qu'une entrée d'air (35) est ménagée dans la fermeture (15), mettant en communication le volume du broc avec le milieu.

12. Broc selon l'une au moins des revendications précédentes, caractérisé en ce que la fermeture (15) est bloquée en position ouverte (18) et peut être dégagée de la position de blocage à l'aide d'un lever de dégagement (40).

13. Broc selon la revendication 12, caractérisé en ce que le couvercle (9) comporte un lever à ressort (31), sur lequel le dispositif de maniement (29) est bloqué en position ouverte (18) et qui peut être dégagé de la position de blocage, avec le dispositif de maniement, à l'aide du lever de dégagement (40).

14. Broc selon l'une au moins des revendications précédentes, caractérisé en ce que la fermeture (15) comporte un tronçon d'étanchéité (25) obturant l'orifice d'écoulement (6) en position fermée (19).

15. Broc selon l'une au moins des revendications précédentes, caractérisé en ce que la membrane (16) recouvre un fond (24) de la fermeture (15), au moins à l'opposé du rebord d'ouverture (5) et/ou de la bague d'étanchéité (4).

16. Broc selon la revendication 15, caractérisé en ce que le fond (24) est entièrement caoutchouté par la membrane (16).

17. Broc selon l'une au moins des revendications précédentes 15 et 16, caractérisé en ce que le fond (24) et/ou la membrane (16) recouvrant celui-ci présente une courbure convexe.

18. Broc selon l'une au moins des revendications précédentes, caractérisé en ce que le dispositif de maniement (29) est réalisé sous forme de lever (29) à deux bras logé dans le couvercle (9), dont le palier à bascule (30) est disposé excentriquement par rapport à l'axe vertical (36) du broc.

19. Broc selon l'une au moins des revendications précédentes 10 à 18, caractérisé en ce que le couvercle (9) comprend un chapeau (11) et un corps de couvercle (12) qui porte ledit couvercle et présente à son extrémité inférieure une partie filetée (10), la rainure (21) destinée à loger la traverse de membrane (20) étant disposée sur une face intérieure (37) de la partie filetée (10).

20. Broc selon l'une au moins des revendications précédentes 18 et 19, caractérisé en ce que le corps de couvercle (12) présente au-dessus de la partie filetée (10) un épaulement (13) sur lequel est disposé le palier à bascule (30).

21. Broc selon l'une au moins des revendications précédentes 18 à 20, caractérisé en ce que le palier à bascule (30) est réalisé sous forme d'axe de palier (38) s'étendant horizontalement.

22. Broc selon la revendication 21, caractérisé en ce que le lever (29) est réalisé essentiellement en forme de L, une branche plus longue (41) du L présentant à son extrémité libre une partie d'actionnement (42) plate, et en ce que des parois latérales (43, 44) relient entre elles les deux branches (41, 45) du L, au moins en dehors de la partie d'actionnement (42), à l'extrémité inférieure de ces parois latérales (43, 44) étant réalisées des encoches d'arrêt (46, 47) pour s'enclencher sur l'axe de palier (38).

23. Broc selon la revendication 22, caractérisé en ce que des yeux de palier (52, 53) destinés au montage pivotant d'un support de fermeture (27) relié à la fermeture (15), font saillie sur les faces extérieures (50, 51) des parois latérales (43, 44).

24. Broc selon la revendication 23, caractérisé en ce que le support de fermeture (27) comporte deux bras de palier (54, 55) saillant de la fermeture (15) vers le haut en direction du chapeau (11), lesquels bras présentent au voisinage de leur extrémités supérieures des trous de palier (56, 57) destinés à recevoir les yeux de palier (52, 53), et en ce qu'aux extrémités supérieures et sur des faces intérieures (58, 59) opposées des bras de palier (54, 55) sont réalisées des pentes d'entrée (60, 61) qui s'étendent en direction des trous de palier (56, 57).

25. Broc selon l'une au moins des revendications précédentes, caractérisé en ce que la bague d'étanchéité (4) présente une lèvre d'étanchéité (63) saillant essentiellement radialement, en direction de l'orifice d'écoulement (6), d'un corps d'étanchéité (62), lequel repose sur un piston isolant (3).

26. Broc selon la revendication 25, caractérisé en ce qu'une face supérieure (64) de la lèvre d'étanchéité (63) est disposée au même niveau que la face supérieure du corps d'étanchéité (62) et en ce qu'une face inférieure (65) de la lèvre d'étanchéité (63) s'étend sensiblement perpendiculairement par rapport à la paroi intérieure (66) du corps d'étanchéité (62).

27. Broc selon l'une au moins des revendications précédentes 25 et 26, caractérisé en ce que la face inférieure (65) de la lèvre d'étanchéité (63) s'étend sous un angle inférieur ou égal à 20°, de préférence 8 à 12°, en direction de la paroi intérieure (66) du corps d'étanchéité (62) en bas vers le haut.

28. Broc selon l'une au moins des revendications précédentes, caractérisé en ce que la membrane (16) obturant l'orifice d'écoulement (6) en position fermée (19) adhère au rebord d'ouverture (5).

29. Broc selon l'une au moins des revendications précédentes, caractérisé en ce que le couvercle (9) présente une partie filetée (10), grâce à laquelle le couvercle (9) est fixé de façon amovible sur le broc (1).
